# EUROPEAN PATENT SPECIFICATION

(11) **EP 4 420 967 B1**
(45) Date of publication and mention of the grant of the patent: **04.02.2026**
(21) Application number: 23220202.8
(22) Date of filing: 25.12.2023
(51) Int. Cl.: B62J 43/16, B62J 43/28, B62K 11/02

(54) **OFF-ROAD ELECTRIC MOTORCYCLE**
GELÄNDEGÄNGIGES ELEKTRISCHES MOTORRAD
MOTOCYCLETTE ÉLECTRIQUE TOUT-TERRAIN

(30) Priority: 27.02.2023 CN 202310172316
(43) Date of publication of application: 28.08.2024
(73) Proprietor: Nanjing Chervon Industry Co., Ltd., Nanjing, Jiangsu 211106 (CN)
(72) Inventor: HE, Yan, Nanjing (CN); ZHANG, Su, Nanjing (CN); LIU, Yangzi, Nanjing (CN); TUCKER, Dane, Nanjing (CN); CAO, Pengpeng, Nanjing (CN)
(74) Representative: Sun, Yiming

(56) References cited:
- EP-A1- 2 871 125
- EP-A2- 2 096 023
- EP-B1- 2 639 092
- EP-B1- 2 670 655
- WO-A1-2019/064495
- US-A1- 2014 366 501

## Description

### TECHNICAL FIELD

The present application relates to a vehicle suitable for a teenager to ride on and, in particular, to an off-road electric motorcycle.

### BACKGROUND

Outdoor driving projects that allow people to feel freedom, happiness, and passion are activities favored by teenagers, such as a go-kart and an all-terrain vehicle (ATV). However, vehicles that can be used for teenagers to ride outdoors and off-road are not common.

This part provides background information related to the present application, which is not necessarily the existing art.

EP2871125A1 discloses a battery including a controller for managing battery cells disposed inside a housing. The controller is disposed one of forward or rearward of the battery cells. The housing has right and left housing half bodies, which form right and left portions of the housing, respectively, and are assembled together in a lateral direction. Provided is the battery that can prevent an increase in the width of a saddle-type electric vehicle while securing the capacity of the housing, and a saddle-type electric vehicle equipped therewith.

EP2096023A2 discloses a structure having a housing with housing walls for foreign particle-protected receiving of a drive component of an electric drive. Support units i.e. seats, support a front wheel arrangement, a rear wheel arrangement and a driver. The housing walls are formed for transmitting force flow between the support units.

The drive component designed as a battery is arranged such that a section is located between the housing walls. The drive component extends through a recess in the housing walls below the support units.

In EP2639092B1, in a case of installing a plurality of electric storage devices such as batteries in an electric car such as an electric motorcycle, a traveling wind passage which extends in forward and rearward direction and through which traveling wind passes along with traveling of the electric car is formed in an electric storage device group including the plurality of electric storage devices. Moreover, connection terminals of each electric storage device and a power cable that connects the connection terminals to each other are disposed in a manner of facing the traveling wind passage. With this configuration, not only the electric storage devices but also the connection terminals and the power cables can be effectively cooled. The plurality of electric storage devices may be divided into two modules, a right side module and a left side module, and each module is collectively connected such that it can be attached to and detached from the electric car.

### SUMMARY

An object of the present application is to solve or at least alleviate some or all of the preceding problems. For this reason, the object of the present application is to provide a motorcycle that can be used for teenagers to ride off-road.

In order to achieve the objective, the invention is set out in the appended set of claims.

### BRIEF DESCRIPTION OF DRAWINGS

FIG. 1 is a structural view of an off-road electric motorcycle in an example of the present application from one perspective;
FIG. 2 is a partial structural view of an off-road electric motorcycle in an example of the present application;
FIG. 3 is a partial structural view of an off-road electric motorcycle in an example of the present application;
FIG. 4 is a structural view of a frame of an off-road electric motorcycle in an example of the present application; and
FIG. 5 is a schematic diagram of the ergonomic structure of an off-road electric motorcycle in an example of the present application;
FIG. 6 is a schematic diagram of power tools that the battery pack of the present application can be adapted to.

### DETAILED DESCRIPTION

Before any examples of this application are explained in detail, it is to be understood that this application is not limited to its application to the structural details and the arrangement of components set forth in the following description or illustrated in the above drawings. Present application is limited by the appended claims.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, A and/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear" " and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

In this application, the terms "controller", "processor", "central processor", "CPU" and "MCU" are interchangeable. Where a unit "controller", "processor", "central processing", "CPU", or "MCU" is used to perform a specific function, the specific function may be implemented by a single aforementioned unit or a plurality of the aforementioned unit.

In this application, the term "device", "module" or "unit" may be implemented in the form of hardware or software to achieve specific functions.

In this application, the terms "computing", "judging", "controlling", "determining", "recognizing" and the like refer to the operations and processes of a computer system or similar electronic computing device (e.g., controller, processor, etc.).

An electric motorcycle is used for a user to ride. In this application, the electric motorcycle is an off-road electric motorcycle as an example. The off-road electric motorcycle introduced in the examples of the present application may be understood as a vehicle for teenagers to ride outdoors and off-road. The driver does not need a driver's license, and the motorcycle does not need a vehicle license. In other examples, the off-road electric motorcycle may also be referred to as a non-engine off-road vehicle, an off-road electric mini vehicle, an electric mini bike, or the like. The off-road electric motorcycle in this example is generally targeted at teenagers aged 10 to 18 years old.

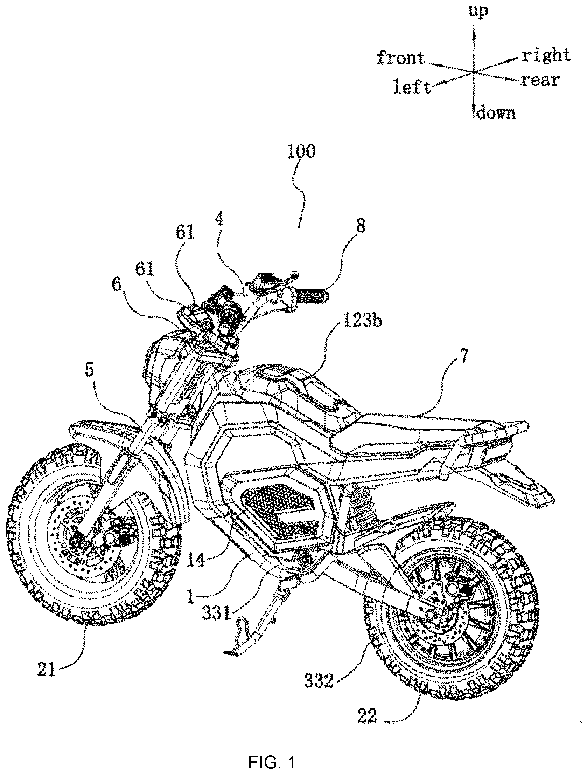

Referring to the off-road electric motorcycle 100 shown in FIGS. 1 to 4, the front and rear direction of the motorcycle 100 is defined as the length direction, the up and down direction of the motorcycle 100 is defined as the height direction, the width direction is perpendicular to both the length direction and the height direction, and the width direction is the left and right direction.

The off-road electric motorcycle 100 according to the present application includes at least a frame 1, wheels 2, a power system 3, and a braking system 4. The frame 1 may be formed by connecting one or more support assemblies 11. The support assemblies 11 may be tubular members of different thicknesses or materials, such as steel pipes or hard pipes made of other materials. Different support assemblies 11 may be connected together through at least one of welding, a flange connection, thread connection, a socket connection, and a grooved clamp connection. A housing 14 covers at least a portion of the frame 1. The wheels 2 includes a front wheel 21 and a rear wheel 22. Generally, the rear wheel 22 may be used as a drive wheel, that is, the rear wheel 12 can be driven by an electric motor to rotate. In other examples, the front wheel 21 may also be used as a drive wheel, or both the front wheel 21 and the rear wheel 22 may be used as drive wheels. The power system 3 is used for driving the wheels 2 to rotate and generally includes an electric motor 33 and a battery pack 32. The electric motor 33 is used for driving the wheels 2 to rotate, and the battery pack 32 can supply electric power to the electric motor 33. The braking system 4 may include a brake line tube and a braking device. The braking device is connected to the wheels. A brake line or brake oil may be disposed in the brake line tube.

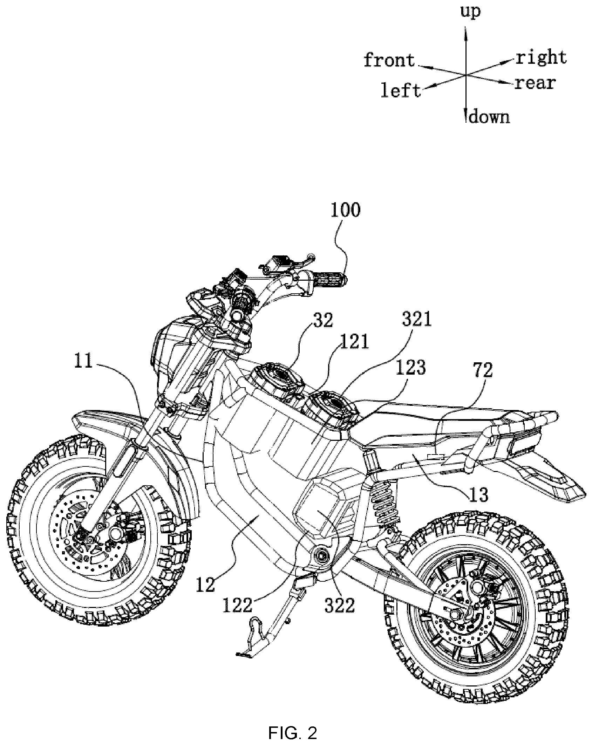

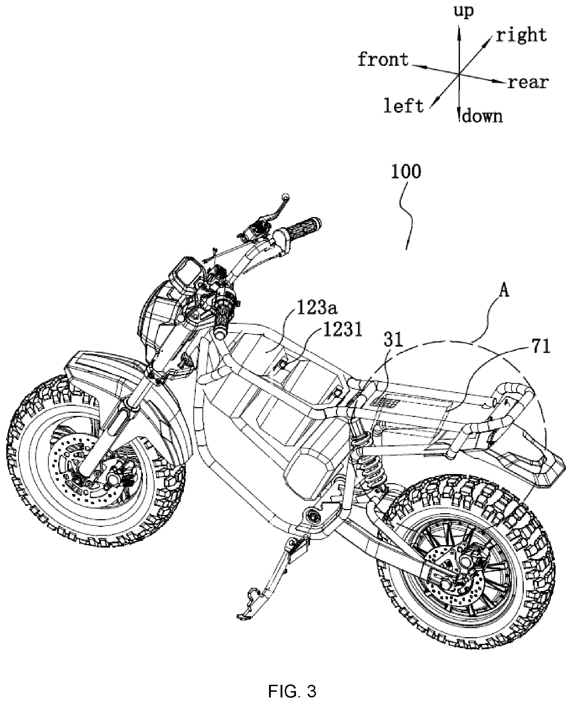

Referring to FIGS. 2 to 4, the support assemblies 11 forming the frame 1 are divided into a first installation section 12 and a second installation section 13. In this example, the frame 1 may be referred to as the support assemblies 11. The first installation section 12 is close to the front end of the off-road electric motorcycle 100, and the second installation section 13 is on the rear side of the first installation section 12. The section formed by the support assemblies 11 above the rear wheel 22 may be referred to as the second installation section 13, or the section formed by the support assemblies 11 below the seat 7 may be referred to as the second installation section 13, or the section that is above the rear wheel 22 and below the seat 7 and formed by the support assemblies 11 may be referred to as the second installation section 13. In an example, after a user sits on the off-road electric motorcycle 100, the section formed by the support assemblies 11 on the front side of the body may be referred to as the first installation section 12, and the other section may be referred to as the second installation section 13. In an example, the two installation sections may be regionally divided by one or more support tubes. As shown in FIG. 3, the section formed by the support assemblies 11 within a circle A may be the first installation section 12, and the section formed by the support assemblies 11 outside the circle A may be the second installation section 13. In this example, there is no unique limitation on the division of the two installation sections.

According to the present application the battery pack 32 is pluggably mounted in the first installation section 12. A battery pack installation compartment 123 is disposed in the first installation section 12 and is used for mounting the battery pack 32. Generally, the battery pack installation compartment 123 may include a compartment body 123a and a compartment cover 123b, and the shape of the compartment body 123a is basically consistent with the shape of the battery pack. In this example, a battery fixing member (not shown) may be disposed on the inner side of the compartment cover 123b and is used for fastening the battery pack in the compartment body 123a after the battery pack is mounted in the compartment body 123a, thereby preventing the battery pack from vibrating with the bumps of the motorcycle 100. In an example, the battery fixing member on the inner side of the compartment cover 123b may be a flexible member or an elastic member and can be squeezed and deformed by the battery pack 32 in the compartment body 123a, thereby filling the gap between the battery pack 32 and the compartment body 123a wall. For example, the battery fixing member may be a rubber soft column or a spring. In an example, the battery fixing member may also be disposed on the inner side of the compartment body 123a. The battery fixing member on the inner side of the compartment cover 123b and the battery fixing member on the inner side of the compartment body 123a may be of the same type or different types. In an example, the compartment cover 123b may be the housing 14 covering the support assemblies 11.

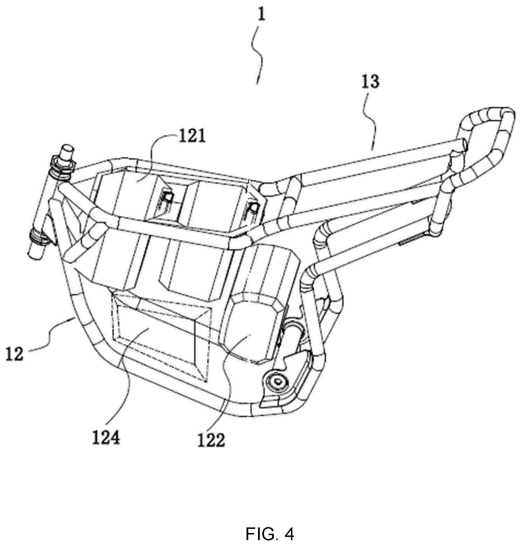

The battery pack 32 includes a main battery pack 321 and a backup battery pack 322. The first installation section 12 is divided into a main battery pack installation section 121 and a backup battery pack installation section 122. The main battery pack 321 is mounted in the main battery pack installation section 121, and the backup battery pack is mounted in the backup battery pack installation section 122. According to the present application, the main battery pack installation section 121 or the backup battery pack installation section 122 may be the battery pack installation compartment 123. In the following description, the battery pack installation section may also be referred to as the battery pack installation compartment 123. In an example, as shown in FIG. 4, the first installation section 12 may also be provided with a storage bin 124, where the storage bin 124 may be disposed between the main battery pack installation section 121 and the backup battery pack installation section 122 or disposed at another position in the first installation section 12.

According to the present application, the main battery pack installation section 121 is located either on the upper side, the lower side, the front side, or the rear side of the backup battery pack installation section 122. It is to be understood that the main battery pack 321 may be a battery pack that provides the main power supply for the off-road electric motorcycle 100. Generally, after the main battery pack 321 is mounted in the main battery pack installation section 121, that is, after the main battery pack 321 is connected to a power supply circuit of the off-road electric motorcycle 100, the user can start the off-road electric motorcycle 100 by operating a power switch. That is to say, a power interface of the off-road electric motorcycle 100 is disposed in the main battery pack installation section 121 and can be electrically connected to the main battery pack 321. The backup battery pack 322 can provide backup energy for the off-road electric motorcycle 100 when the power of the main battery pack 321 is insufficient. In an example, the power interface of the off-road electric motorcycle 100 is disposed in the backup battery pack installation section 122. After the backup battery pack 322 is mounted in this section, the backup battery pack 322can be connected to the power supply circuit of the off-road electric motorcycle 100. After the user operates the power switch, a power control system of the off-road electric motorcycle 100 can control the backup battery pack 322 to discharge together with the main battery pack 321 or control the backup battery pack 322 not to discharge. The backup battery pack 322 is used for supplying power until the power of the main battery pack 321 is insufficient. In an example, no power interface is disposed in the backup battery pack installation section 122. That is to say, the backup battery pack installation section 122 may be used as a storage space, just for storing the backup battery pack 322. When the power of the main battery pack 321 is insufficient, the user may take out the backup battery pack 322 to replace the main battery pack 321 in the main battery pack installation section 121, so as to supply power to the off-road electric motorcycle 100.

In this example, the compartment cover 123b of the battery pack installation compartment 123 in which at least the main battery pack 321 is mounted may be made of transparent material so that the user can observe the display information of the battery pack 32, such as the current power information of the main battery pack 321, the remaining discharge time, or the temperature, without opening the compartment cover 123b. In an example, the compartment cover 123b and the compartment body 123a may be locked by a mechanical lock, locked by a password lock, or engaged by a buckle interface. A battery pack pop-up structure 1231 may be disposed in the compartment body 123a and can mate with a locking structure on the battery pack 32 to fix the battery pack 32 in the compartment body 123a. The user can decouple the mechanical coupling between the battery pack 32 and the compartment body 123a by pressing the battery pack pop-up structure 1231, thereby taking out the battery pack 32. That is to say, in this example, after the user opens the compartment cover 123b, the user can take out the battery pack from the battery pack installation compartment 123 without using other tools to replace or charge the battery pack. In an example, a direction along which the main battery pack 321 is plugged and unplugged is different from a direction along which the backup battery pack 322 is plugged and unplugged. In an example, a direction along which the main battery pack 321 is extracted is different from a direction along which the backup battery pack 322 is extracted. For example, the direction along which the main battery pack 321 is extracted may be an obliquely upward direction, while the direction along which the backup battery pack 322 is extracted may be a horizontal direction. Alternatively, the direction along which the main battery pack 321 is extracted may be a horizontal direction, while the direction along which the backup battery pack 321 is extracted may be an obliquely upward direction. In this example, the off-road electric motorcycle 100 may further include a front fork 5 for fixing the front wheel 21, and at least a handle 8 is fixed above the front fork 5. In an example, the direction along which the main battery pack is extracted is basically parallel to the front fork 5, and the direction along which the backup battery pack 322 is extracted is basically parallel to the width direction of the motorcycle 100.

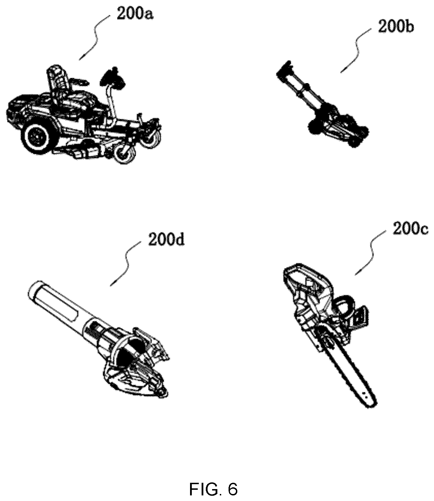

According to the present application, the main battery pack 321 and/or the backup battery pack 322 can be coupled to a power tool 200 after being detached from the first installation section 12 to supply power to the power tool 200. In an example, as shown in FIG. 6, the power tool 200 may be a riding mower 200a, a push mower 200b, a handheld chain saw 200c, a handheld blower 200d, or the like. In this example, the power tool may be a handheld power tool, such as a drill, a hedge trimmer, or a sander. Alternatively, the power tool may be a table tool, such as a table saw or a miter saw. Alternatively, the power tool may be a push power tool, such as the push mower or a push snow thrower. Alternatively, the power tool may be a riding power tool, such as the riding mower, a riding vehicle, or an all-terrain vehicle. Alternatively, the power tool may be a robotic tool, such as a robotic mower or a robotic snow thrower. In some examples, the power tool may be an electric drill, an electric lamp, an electric vehicle, or the like. In some examples, the power tool may be a garden tool, such as the hedge trimmer, a blower, a mower, or a chain saw. Alternatively, the power tool may be a decoration tool, such as a screwdriver, a nail gun, a circular saw, or the sander. In some examples, the power tool may be a plant care tool, such as a grass trimmer, the mower, the hedge trimmer, or the chain saw. Alternatively, the power tool may be a cleaning tool, such as the blower, a snow thrower, or a washer. Alternatively, the power tool may be a drill-like tool, such as the drill, the screwdriver, a wrench, or an electric hammer.

Alternatively, the power tool may be a saw-like tool, such as a reciprocating saw, a jigsaw, or the circular saw. Alternatively, the power tool may be a table tool, such as the table saw, the miter saw, a metal cutter, or an electric router. Alternatively, the power tool may be a sanding tool, such as an angle grinder or the sander. Alternatively, the power tool may be another tool, such as a lamp or a fan.

In this example, the nominal voltage of the battery pack 32 is greater than or equal to 36 V. In an example, the nominal voltage of the battery pack 32 is greater than or equal to 40 V. In an example, the nominal voltage of the battery pack 32 is greater than or equal to 56 V. In an example, the nominal voltage of the battery pack 32 is greater than or equal to 64 V. In an example, the nominal voltage of the battery pack 32 is greater than or equal to 80 V. In an example, the nominal voltage of the battery pack 32 is greater than or equal to 100 V. In this example, the main battery pack 321 may be at least two independently pluggable battery packs. That is to say, at least two battery packs 32 may be mounted in the main battery pack installation section 121, and each battery pack 32 is independently pluggable. It is also to be understood that at least two battery packs 32 supply power to the off-road electric motorcycle 100. In an example, multiple main battery packs may be made of the same material. For example, the cells in the multiple main battery packs are all lithium batteries, lithium iron phosphate batteries, capacitor batteries, sodium-ion batteries, or ternary lithium batteries. In an example, the multiple main battery packs may be made of different materials. For example, the cell of one main battery pack 321 is a lithium battery, and the cell of another main battery pack 321 is a lithium iron phosphate battery. In some examples, at least two backup battery packs 322 may be placed in the backup battery pack installation compartment 123. The materials of the two backup battery packs 322 may be the same or different.

To manage the discharge of the battery pack 32, a power management module (not shown) is further disposed in the off-road electric motorcycle 100. The power management module may be disposed in the first installation section 12, for example, in the main battery pack installation compartment 123 or the backup battery pack installation compartment 123. In other examples, the power management module may be mounted in the second installation section 13. The power management module may manage at least the discharge sequence or charge sequence of the battery packs. For example, the power management module may manage the discharge sequence between multiple main battery packs, the discharge sequence between multiple backup battery packs, or the discharge sequence between multiple main battery packs and multiple backup battery packs. In other words, the battery management module may manage the discharge state of at least one battery pack mounted in the off-road electric motorcycle 100.

In an example, at least two independently pluggable main battery packs 321 are mounted in the first installation section 12, and the discharge states of the two main battery packs 321 are controllable. For example, the power management module has at least a first discharge control mode and a second discharge control mode. In the first discharge control mode, one of at least two main battery packs supplies power to the electric motor, and the other one of the at least two main battery packs does not supply power. In the second discharge control mode, the at least two main battery packs supply power to the electric motor. In an example, the power management module may select the discharge control mode according to the voltages of the at least two main battery packs. For example, when the voltages of the at least two main battery packs are the same, the power management module may select the second discharge control mode; and when the voltages of the at least two main battery packs are different, the power management module may select the first discharge control mode. In the second discharge control mode, the power management module may control the at least two main battery packs to discharge in parallel or in turn at a certain frequency. For example, a battery pack A is discharged for 1 minute and stops discharging, a battery pack B is discharged for 1 minute and stops discharging, the battery pack A is discharged for 1 minute, and so on. In an example, when at least two main battery packs electrically connected to the off-road electric motorcycle 100 and at least two backup battery packs electrically connected to the off-road electric motorcycle 100 are mounted in the off-road electric motorcycle 100, the power management module may have a third discharge control mode. In the third discharge control mode, multiple main battery packs are discharged first, and then multiple backup battery packs are discharged after the main battery packs complete discharging. In the third discharge control mode, for the discharge control mode of the multiple main battery packs, reference may be made to the preceding first discharge control mode or second discharge control mode, and for the discharge control mode of the multiple backup battery packs, reference may be made to the preceding first discharge control mode or second discharge control mode. Referring to FIG. 4, the regional range of the second installation section 13 into which the support assembles 11 are divided is less than the regional range of the first installation section 12 into which the support assembles 11 are divided. Most of the second installation section 13 is located above the rear wheel 22, and the seat 7 is disposed on the second installation section 13. A safety control switch 72 is disposed below the seat 7. When the safety control switch 72 is turned on, the motorcycle 100 is allowed to have the maximum traveling speed. For example, the maximum traveling speed may reach 50 km/h. When the safety control switch 72 is turned off, the off-road electric motorcycle 100 cannot reach the maximum traveling speed. For example, the traveling speed does not exceed 40 km/h. That is to say, the user can control the maximum traveling speed of the off-road electric motorcycle 100 through the safety control switch, thereby improving the riding safety of teenagers. Generally, the off-road electric motorcycle 100 is provided with gears for at least three driving types, such as a forward gear, a reverse gear, and a neutral gear. A gear type selection switch is generally disposed on the handle 8 or a head tube 6. The maximum traveling speeds of the off-road electric motorcycle 100 are different in different types of gears. For example, the maximum traveling speed in the forward gear may be 50 km/h, 45 km/h, or 40 km/h, while the maximum traveling speed in the reverse gear may be 10 km/h, 5 km/h, 2 km/h, or 1 km/h. For example, the gear type selection switch may be a toggle switch, a press switch, or a touch screen button disposed on a display screen 61. In an example, a speed control switch is further disposed on the handle 8 or the head tube 6 and is used for the user to control the traveling speed of the off-road electric motorcycle 100. For example, the speed control switch may be a rotary switch on the handle 8, and the speed control switch may be a foot pedal disposed at the bottom of the frame 1. In an example, a driving mode selection switch may be further disposed on the handle 8 or the head tube 6 or at another position on the vehicle body. Through the driving mode selection switch, the user may choose whether to drive in a normal riding mode or an auxiliary propulsion mode. The so-called auxiliary propulsion mode may be understood as a working mode in which the power of the battery pack is not enough for the off-road electric motorcycle 100 to drive normally, but the power of the battery pack can still enable the electric motor to have smaller torque or rotational speed, and the off-road electric motorcycle 100 needs to be driven through the thrust of the user. In this driving mode, the thrust of the user plus the torque of the electric motor together form the driving force of the off-road electric motorcycle 100.

In an example, as shown in FIG. 1, an electric motor 331 for driving the front wheel 21 and/or the rear wheel 22 may be mounted between the first installation section 12 and the second installation section 13. In other examples, the electric motor 33 may be disposed in the second installation section 13 or mounted between the first installation section 12 and the rear wheel 22. In other examples, the electric motor 332 may be a wheel hub motor integrated into the front wheel 21 and/or the rear wheel 22. In this example, the average output power of the electric motor 331, 332 is less than or equal to 2000 W, for example, 2000 W, 1500 W, 1000 W, 800 W, or 500 W. The maximum output power of the electric motor 331, 332 is less than or equal to 3500 W, for example, 3500 W, 3000 W, or 2500 W. The maximum output torque of the electric motor 331, 332 is less than or equal to 200 N·m, for example, 200 N·m, 150 N·m, 120 N·m, or 100 N·m.

In this example, the maximum peak current in a control loop for a control module to control the operation of the electric motor 331, 332 is greater than or equal to 20 A. For example, the maximum peak current may be 20 A, 40 A, 60 A, 80 A, or the like.

In this example, a control panel 31 of the whole machine may be disposed in the first installation section 12 and/or the second installation section 13. The control panel 31 is provided with at least the control module for controlling the operation of the electric motor. The control module may include at least a control unit or controller capable of outputting a control signal and a driver circuit capable of changing the conduction state of the windings in the electric motor. In an example, the control module is located in the space below the seat 7. In an example, the power management module may be disposed below the seat 7 and at a position close to the control panel 31. In an example, a storage space 71 may be further provided in the second installation section 13 below the seat 7.

In this example, the off-road electric motorcycle 100 is further provided with a charging interface 61 so that the battery pack can be used to charge a smartphone or other external electrical devices. The charging interface may be disposed on the head tube 6, in the battery pack installation compartment 123, or on the compartment cover 123b of the battery pack installation compartment 123. For example, the charging interface may be disposed in the backup battery pack installation compartment. In an example, the charging interface may be a Universal Serial Bus (USB) interface. For example, the charging interface may be at least one of a USB Type-A interface or a USB Type-C interface. This type of charging interface can output the electrical energy of the battery pack 32 to the external electrical device. For example, the charging interface may be connected to a mobile phone, so as to charge the mobile phone of the user.

In an example, the charging interface may be electrically connected to a charger, so as to charge the battery pack 32 electrically connected to the power management module. In an example, the charging interface may be disposed outside the off-road electric motorcycle 100, and an output interface of the charger may be electrically connected to the charging interface of the off-road electric motorcycle 100 through an external cable, or the output interface of the charger is directly electrically connected to the charging interface of the off-road electric motorcycle 100, for example, in a plug-in manner. In other examples, the charging interface may be located inside the motorcycle 100. The charger may be built into the off-road electric motorcycle 100, and the charger built into the off-road electric motorcycle 100 may be connected to the charging interface through a built-in charging cable. In an example, the off-road electric motorcycle 100 may be provided with an electrical energy input terminal that is different from the charging interface. The electrical energy input terminal may be externally connected to an electrical energy input terminal of alternating current mains power or connected to an external power supply, such as a charging pile for a vehicle, so as to charge the battery pack in the off-road electric motorcycle 100.

In this example, at least one shock absorbing device is further disposed between the second installation section 13 and the rear wheel 22. The shock absorbing device may include an elastic member or a telescopic member, such as a spring or a telescopic tube. This example does not describe the specific structure of the shock absorbing device in detail.

In this example, the maximum load capacity of the off-road electric motorcycle 100 is greater than or equal to 200 kg, greater than or equal to 220 kg, greater than or equal to 250 kg, or the like.

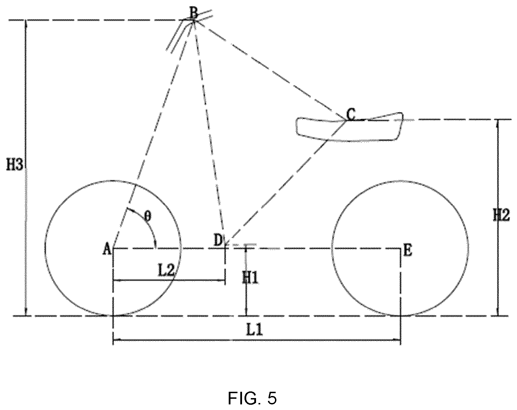

Referring to the simplified diagram of the off-road electric motorcycle 100 shown in FIG. 5, a point A is the center point of the axle of the front wheel 21, a point B is the center of the handle 8, a point C is the geometric center point of the upper surface of the seat 7, a point D is the midpoint of the position of the foot pedal, and a point E is the center point of the axle of the rear wheel 22. In this example, the distance L1 between the point A and the point E is basically 100 cm, the distance L2 between the point A and the point D is basically 40 cm, the height H1 of the point D from the ground is basically 26 cm, the height H2 of the point C from the ground is basically 75 cm, the height H3 of the point B from the ground is basically 100 cm, and the included angle θ between a line AB and a line AE is basically 65°.

In an example, the distance L1 between the point A and the point E is greater than or equal to 90 cm and less than or equal to 110 cm. In one example, the distance L2 between the point A and the point D is greater than or equal to 35 cm and less than or equal to 45 cm. In one example, the height H1 of the point D from the ground is greater than or equal to 22 cm and less than or equal to 30 cm. In one example, the height H2 of the point C from the ground is greater than or equal to 70 cm and less than or equal to 80 cm. In one example, the height H3 of the point B from the ground is greater than or equal to 90 cm and less than or equal to 110 cm. In one example, the included angle θ between a line AB and a line AE is greater than or equal to 60° and less than or equal to 70°.

## Claims

1. An off-road electric motorcycle (100), comprising:
a frame (1);
wheels (2) comprising at least a front wheel (21) and a rear wheel (22);
a power system (3) comprising an electric motor (33) and a battery pack (32), wherein the electric motor is used for driving the wheels, and the battery pack is used for supplying power to the electric motor; and
a braking system (4) configured to brake the off-road electric motorcycle;
wherein the frame comprises a support assembly (11) disposed along a length direction of the off-road electric motorcycle, and the support assembly is divided into at least a first installation section (12) and a second installation section (13), the battery pack is mounted in the first installation section, and the first installation section is located at a front end of the second installation section;
the battery pack is pluggably mounted in the first installation section; **characterized in that**
the battery pack is configured to be coupled to a power tool (200, 200a, 200b, 200c, 200d) after being detached from the first installation section;
wherein the battery pack comprises a main battery pack (321) and a backup battery pack (322);
wherein the first installation section is divided into a main battery pack installation section (121) and a backup battery pack installation section (122);
wherein the main battery pack installation section is located on an upper side of the backup battery pack installation section, or
wherein the main battery pack installation section is located on a lower side of the backup battery pack installation section, or
wherein the main battery pack installation section is located on a front side of the backup battery pack installation section, or
wherein the main battery pack installation section is located on a rear side of the backup battery pack installation section.

2. The off-road electric motorcycle of claim 1, further comprising a front fork (5) connected to the front wheel, wherein a direction along which the main battery pack is plugged and unplugged is basically parallel to the front fork.

3. The off-road electric motorcycle of claim 1, wherein a direction along which the backup battery pack is plugged and unplugged is basically parallel to a width direction of the off-road electric motorcycle.

4. The off-road electric motorcycle of claim 1, wherein the battery pack comprises at least two independently pluggable battery packs.

5. The off-road electric motorcycle of claim 1, wherein a seat (7) is disposed on the second installation section, and a control module is disposed below the seat and configured to control the electric motor to rotate.

6. The off-road electric motorcycle of claim 5, wherein a safety control switch (72) is further disposed below the seat.

7. The off-road electric motorcycle of claim 5, wherein a storage space (71) is further disposed below the seat.

8. The off-road electric motorcycle of claim 1, wherein a battery pack installation compartment (123) is disposed in the first installation section and comprises a compartment body (123a) and a compartment cover (123b), and a battery fixing member is disposed on an inner side of the compartment cover and/or an inner side of the compartment body.

9. The off-road electric motorcycle of claim 8, wherein the battery fixing member comprises an elastic member or a flexible member.

## Patentansprüche

1. Geländefähiges Elektromotorrad (100), umfassend:
einen Rahmen (1);
Räder (2), die zumindest ein Vorderrad (21) und ein Hinterrad (22) umfassen;
ein Antriebssystem (3) mit einem Elektromotor (33) und einem Batteriepaket (32), wobei der Elektromotor zum Antreiben der Räder vorgesehen ist und das Batteriepaket zur Versorgung des Elektromotors mit elektrischer Energie vorgesehen ist; und
ein Bremssystem (4), das zum Abbremsen des geländefähigen Elektromotorrads ausgebildet ist;
wobei der Rahmen eine entlang einer Längsrichtung des geländefähigen Elektromotorrads angeordnete Stützanordnung (11) umfasst und die Stützanordnung in zumindest einen ersten Montageabschnitt (12) und einen zweiten Montageabschnitt (13) unterteilt ist, wobei das Batteriepaket in dem ersten Montageabschnitt montiert ist und der erste Montageabschnitt an einem vorderen Ende des zweiten Montageabschnitts angeordnet ist,
wobei das Batteriepaket steckbar in dem ersten Montageabschnitt montiert ist, **dadurch gekennzeichnet, dass**
das Batteriepaket dazu eingerichtet ist, nach dem Abnehmen aus dem ersten Montageabschnitt mit einem Elektrowerkzeug (200, 200a, 200b, 200c, 200d) gekoppelt zu werden,
wobei das Batteriepaket ein Hauptbatteriepaket (321) und ein Backup-Batteriepaket (322) umfasst,
wobei der erste Montageabschnitt in einen Hauptbatteriepaket-Montageabschnitt (121) und einen Backup-Batteriepaket-Montageabschnitt (122) unterteilt ist,
wobei der Hauptbatteriepaket-Montageabschnitt auf einer Oberseite des Backup-Batteriepaket-Montageabschnitts angeordnet ist, oder
wobei der Hauptbatteriepaket-Montageabschnitt auf einer Unterseite des Backup-Batteriepaket-Montageabschnitts angeordnet ist, oder
wobei der Hauptbatteriepaket-Montageabschnitt auf einer Vorderseite des Backup-Batteriepaket-Montageabschnitts angeordnet ist, oder
wobei der Hauptbatteriepaket-Montageabschnitt auf einer Rückseite des Backup-Batteriepaket-Montageabschnitts angeordnet ist.

2. Geländefähiges Elektromotorrad nach Anspruch 1, ferner umfassend eine mit dem Vorderrad (21) verbundene Vorderradgabel (5), wobei eine Richtung, entlang der das Hauptbatteriepaket ein- und ausgesteckt wird, im Wesentlichen parallel zu der Vorderradgabel verläuft.

3. Geländefähiges Elektromotorrad nach Anspruch 1, wobei eine Richtung, entlang der das Backup-Batteriepaket ein- und ausgesteckt wird, im Wesentlichen parallel zu einer Breitenrichtung des geländefähigen Elektromotorrads verläuft.

4. Geländefähiges Elektromotorrad nach Anspruch 1, wobei das Batteriepaket mindestens zwei unabhängig voneinander steckbare Batteriepakete umfasst.

5. Geländefähiges Elektromotorrad nach Anspruch 1, wobei auf dem zweiten Montageabschnitt ein Sitz (7) angeordnet ist und unterhalb des Sitzes ein Steuermodul angeordnet ist, das dazu eingerichtet ist, den Elektromotor zum Rotieren anzusteuern.

6. Geländefähiges Elektromotorrad nach Anspruch 5, wobei unterhalb des Sitzes ferner ein Sicherheitssteuerschalter (72) angeordnet ist.

7. Geländefähiges Elektromotorrad nach Anspruch 5, wobei unterhalb des Sitzes ferner ein Stauraum (71) angeordnet ist.

8. Geländefähiges Elektromotorrad nach Anspruch 1, wobei in dem ersten Montageabschnitt ein Batteriepaket-Installationsfach (123) angeordnet ist, das einen Fachkörper (123a) und eine Fachabdeckung (123b) umfasst, und wobei an einer Innenseite der Fachabdeckung und/oder an einer Innenseite des Fachkörpers ein Batteriebefestigungselement angeordnet ist.

9. Geländefähiges Elektromotorrad nach Anspruch 8, wobei das Batteriebefestigungselement ein elastisches Element oder ein flexibles Element umfasst.

## Revendications

1. Motocyclette électrique tout-terrain (100), comprenant :
un cadre (1) ;
des roues (2) comprenant au moins une roue avant (21) et une roue arrière (22) ;
un système d'entraînement (3) comprenant un moteur électrique (33) et un bloc de batteries (32), le moteur électrique étant destiné à entraîner les roues et le bloc de batteries étant destiné à alimenter le moteur électrique en énergie ; et
un système de freinage (4) configuré pour freiner la motocyclette électrique tout-terrain ;
le cadre comprenant un ensemble de support (11) disposé le long d'une direction longitudinale de la motocyclette électrique tout-terrain, l'ensemble de support étant divisé en au moins une première section d'installation (12) et une deuxième section d'installation (13), le bloc de batteries étant monté dans la première section d'installation et la première section d'installation étant située à une extrémité avant de la deuxième section d'installation ;
le bloc de batteries étant monté de manière enfichable dans la première section d'installation ; **caractérisée en ce que**
le bloc de batteries est conçu pour être couplé à un outil électrique (200, 200a, 200b, 200c, 200d) après avoir été retiré de la première section d'installation,
le bloc de batteries comprenant un bloc de batteries principal (321) et un bloc de batteries de secours (322),
la première section d'installation étant divisée en une section d'installation de bloc de batteries principal (121) et une section d'installation de bloc de batteries de secours (122),
la section d'installation de bloc de batteries principal étant située sur un côté supérieur de la section d'installation de bloc de batteries de secours, ou
la section d'installation de bloc de batteries principal étant située sur un côté inférieur de la section d'installation de bloc de batteries de secours, ou
la section d'installation de bloc de batteries principal étant située sur un côté avant de la section d'installation de bloc de batteries de secours, ou
la section d'installation de bloc de batteries principal étant située sur un côté arrière de la section d'installation de bloc de batteries de secours.

2. Motocyclette électrique tout-terrain selon la revendication 1, comprenant en outre une fourche avant (5) reliée à la roue avant, une direction suivant laquelle le bloc de batteries principal est enfiché et retiré étant sensiblement parallèle à la fourche avant.

3. Motocyclette électrique tout-terrain selon la revendication 1, une direction suivant laquelle le bloc de batteries de secours est enfiché et retiré étant sensiblement parallèle à une direction de largeur de la motocyclette électrique tout-terrain.

4. Motocyclette électrique tout-terrain selon la revendication 1, le bloc de batteries comprenant au moins deux blocs de batteries pouvant être enfichés de manière indépendante l'un de l'autre.

5. Motocyclette électrique tout-terrain selon la revendication 1, un siège (7) étant disposé sur la deuxième section d'installation et un module de commande étant disposé sous le siège et configuré pour commander la rotation du moteur électrique.

6. Motocyclette électrique tout-terrain selon la revendication 5, un interrupteur de commande de sécurité (72) étant en outre disposé sous le siège.

7. Motocyclette électrique tout-terrain selon la revendication 5, un espace de rangement (71) étant en outre disposé sous le siège.

8. Motocyclette électrique tout-terrain selon la revendication 1, un compartiment d'installation de bloc de batteries (123) étant disposé dans la première section d'installation et comprenant un corps de compartiment (123a) et un couvercle de compartiment (123b), et un organe de fixation de batterie étant disposé sur une face interne du couvercle de compartiment et/ou sur une face interne du corps de compartiment.

9. Motocyclette électrique tout-terrain selon la revendication 8, l'organe de fixation de batterie comprenant un élément élastique ou un élément flexible.
